# EUROPEAN PATENT APPLICATION

(11) **EP 2 587 828 A1**
(43) Date of publication of application: **01.05.2013**
(21) Application number: 11250869.2
(22) Date of filing: 24.10.2011
(51) Int. Cl.: H04N 21/472, H04N 21/45, H04N 21/6543, H04N 21/81, H04N 21/262

(54) **Media access**

(71) Applicant: British Telecommunications Public Limited Company, London EC1A 7AJ (GB)
(72) Inventor: The designation of the inventor has not yet been filed
(74) Representative: Cardus, Alan Peter

(57) **Abstract**

Media (e.g. video or audio) for playing to a user is selected and combined into a programming unit for playing in combination based on selection of metadata. Media is selected (e.g. at a client device) by accessing a first metadata group associated with a first media part, which may be requested by the user, and a plurality of further metadata groups associated with further media parts including optional media parts. A subset of the plurality of further metadata groups associated with a subset of the optional media parts is selected. The media parts associated with the selected metadata are accessed (e.g. by the client device) for playing in combination with the first media part.

## Description

The present invention relates to media delivery systems and, in particular, to systems for accessing media for playing to a user.

In a video media delivery system, it is known to use metadata files to program a video media receiver (such as the widely used set top box (STB)) to provide a suite of video media to a display for viewing by a user. Conventionally video media may comprise audio, e.g. sound track. Similar media delivery systems may be envisioned for delivering just audio media, the audio media delivery system using metadata files to program an audio media receiver to provide a suite of audio media to a delivery system for output to a user. Media may represent live or pre-recorded material and may be transferred according to any known format and protocol and by streaming or otherwise. For example, video media streams may be transmitted to users in IP television and video-on-demand systems. The media may be delivered via a number of different communications channels, including TV and radio broadcast and via wide area networks, such as the Internet.

Whether audio or video, the suite of media is typically made up of a feature (e.g. a TV or radio programme, film, piece of music or similar) selected by the user and one or more pieces of further media that is associated, by the media delivery system, with the user-selected media. This further media typically comprises (but is not limited to) some sort of promotional item such as bumpers, trailers for other media that is available through the media delivery system and advertisements for commercially available products and services. Alternatively at least part of the further media may comprise advice or guidance for the user, although the term "promotional item" or simply "promo" will be used here to denote all such types of further media. A particular set of further media may be associated with a specific feature or with a class of features (such as media for children or associated with horror films). The provider may wish to modify the promotional item associated with a particular feature or class of features, for example in order to better suit the media genre, the season or time of day. Moreover, increasing variety in promotional items, in particular, may make them more effective. Currently used video media delivery systems are inflexible in not providing adequate support for changing the further media associated with a feature or class of features.

It is an object of the present invention to address, at least in part, the problems outlined above. This object and others may be obtained by providing methods and arrangements according to the independent claims attached below.

In the method of accessing media for playing to a user described herein the media comprises a first media part and further media parts for playing in combination with the first media part. The method comprises receiving at a client device a first metadata group associated with the first media part; processing the first metadata group to obtain information on a plurality of further metadata groups, in which each further metadata group is associated with a different one of the further media parts; selecting at the client device a subset of the plurality of further metadata groups, in which the subset comprises metadata groups associated with a subset of the further media parts; and accessing for playing in combination the first media part associated with the first metadata group and the subset of the further media parts, associated with the selected metadata groups.

Flexibility is enhanced in providing for selection at the client device of media to play together with a first media part, for example a film or TV programme. The first media part may be media requested by the user, whereas the further media parts for playing in combination with the first media part may be promos selected by the set top box, so that a choice is provided at the client device as to what promos to play in combination with a requested feature.

The first metadata group may be received at the client device in response to a request for the first media part made on behalf of the user.

Accessing the media in a content delivery network may be simplified where a metadata group comprises an identifier for the associated media part. The client device may issue a request comprising the identifier for the address in the content delivery network of the media part, receive the requested address and use the received address to access the media part.

The client device described herein comprises:
a metadata processor configured to process, in response to a user request to play a first media part, metadata associated with the first media part to locate information relating to further metadata associated with a plurality of further media parts for playing in combination with the first media part;

in which the metadata processor is configured to use the information relating to the further metadata to access the further metadata;

in which the metadata processor is configured to select, from the further metadata, selected metadata associated with some but not all of the plurality of further media parts; and
a media player configured to access, on the basis of the metadata associated with the first media part and the selected further metadata, for playing in combination, the first media part and the media parts associated with the selected further metadata.

The invention is illustrated by way of example, and not by way of limitation, in the figures of the accompanying drawings in which like reference numerals refer to similar elements.
Figures 1, 2 and 7 show in schematic form a computer network or system and components thereof suitable for implementing the invention; and
Figures 3 to 6 show sample metadata files according to aspects of the invention.

Video media includes features (such as films and TV programmes - i.e. what the viewer chooses to watch) and assets or promos, which are added around a feature by a client device, such as a set top box. A content management system (CMS) provides the STB with programme information in the form of metadata. The metadata may be provided in a SMIL file, or similar. SMIL (Synchronized Multimedia Integration Language) is a W3C recommended XML mark-up language for describing multimedia presentations although another XML file format could be used. Alternative formats include XML or JSON and the term "SMIL" is used below to include all suitable file formats.

The following terminology is used in this document. By "media" is meant video or audio media for consumption (hearing or viewing) by a user, including features and assets. By feature is meant media, such as a film, that is selected to view by the user. By "asset" is meant additional media, e.g. promos, appended to a feature selected for viewing by the user to create a programming unit. By "programming unit" is meant a collection of different media to be played together and defined by a presentation wrapper or similar. By "metadata" is meant data describing or defining media, e.g. XML or SMIL. By "content" is meant media and metadata relating to the media. By "client device" is meant e.g. STB, smart phone, general purpose personal computer or IPTV application for receiving content for playing to a user. A client device may have an electronic programme guide (EPG) stored on it to inform the user as to available linear features. In an alternative, the EPG may also contain information on downloadable (VoD) features;

A conventional SMIL file comprises a single record for each asset comprised in a programming unit, e.g. a record identifying a promotional item that is played each time the associated feature or type of feature comprised in the same programming unit is played. The invention provides a new form of SMIL file (known as a "Dynamic Presentation File") that provides for a plurality of "dynamic" records to be included for at least one type of added asset, each dynamic record is associated with a different asset (so-called "dynamic asset"). Each time the feature identified in the Dynamic Presentation is played, one or more but not all (i.e. a sub set) of the plurality of dynamic records is selected (at random or according to some algorithm) and a corresponding sub set of the dynamic assets is played.

The invention enables a plurality of promotional items to be identified in a single SMIL file, from which one or more promotional item may be selected each time that feature (or type of feature) is played on a device. This allows a wider range of promotional items to be played to users, allowing more subjects to be covered, while increasing variety and possibly improving effectiveness by reducing "advertisement fatigue" with no significant increase in management overheads.

The invention will now be described, by way of example, with reference to a video on demand system comprising a media processing unit (MPU) for handling media files and content management system (CMS) for handling media metadata.

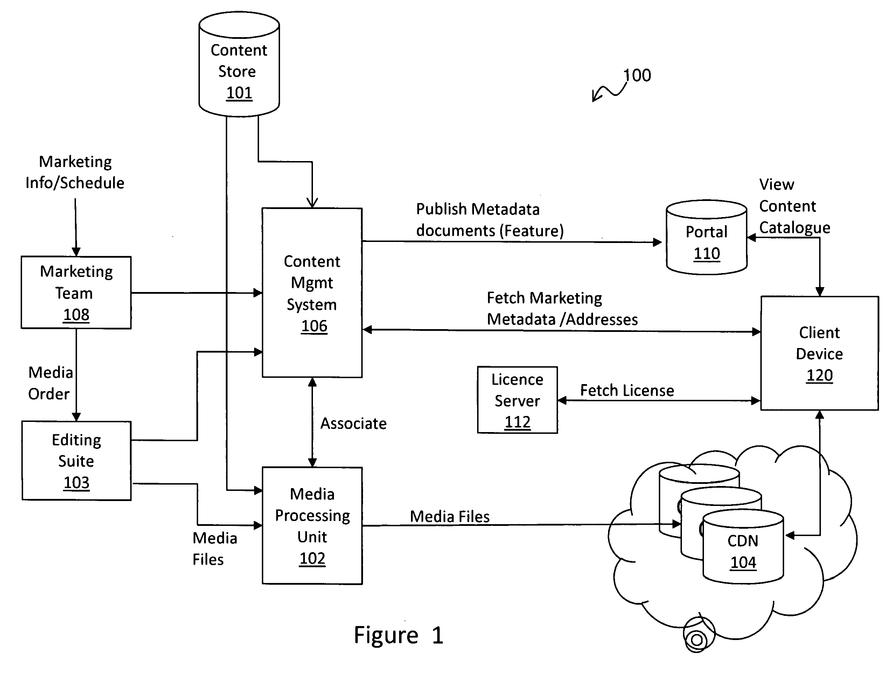

Figure 1 shows a computer network or system 100 for providing media to client device 120 for playing for a user (not shown). One or more content stores 101 hold content, including features, assets and metadata associated with those features and assets. The content in content stores 101 derives from content providers, such as film or TV studios, news organisations advertising agencies and may be derived directly or via content distributors. Media for playing to the user is downloaded from the appropriate content store 101 by media processing unit (MPU) 102. A programming unit for a feature may be created from the media downloaded to MPU 102. Media stored by MPU 102 may be processed to generate further media. For example, a trailer for a feature may be generated in an editing suite 103 from clips extracted from media for that feature that is present at MPU 102. The choice of trailer may be determined by marketing information.

MPU 102 loads the individual media (including that to be eventually played as part of a programming unit) into content delivery network (CDN) 104, from where it may be accessed by client device 120. CDN 104, such as Wholesale Broadband Connect from BT, may be located in the Internet or a proprietary media distribution network, such as a WAN or intra-organisation LAN to which client device 120 has access.

Metadata relating to media for playing to the user is downloaded from the appropriate content store 101 by content management system (CMS) 106. A programming unit for a feature may be defined in terms of metadata downloaded to CMS 106 in the from of a marketing information document (MID), a form of SMIL file. A MID is created at CMS 106 from metadata under control of marketing team 108, which may be associated with a media provider organisation. The MID defines what assets are to be played together with a feature or class of feature in a programming unit and is drawn up based on information and rules, which may be provided by the marketing team 108. The rules may, for example, determine that certain promotional material is not played at certain times of day. The information may, for example, identify what asset to associate with what feature or type of feature. The information may, for example, identify on the basis of marketing segmentation data, similarity in audiences for different features, which may result in a trailer for one feature being associated with a second feature.

CMS 106 loads feature metadata files to portal 110 (e.g. a web portal or file server). Feature metadata is published to portal 110 to form a catalogue of downloadable (e.g. on-demand) media. The catalogue comprises a listing identifying features available for downloading and consuming by the user. To assist the user in making a choice, the metadata loaded to portal 110 will typically comprise the name of the feature, its genre and running time, a brief synopsis and, where appropriate, an indication of price to view. Client device 120 browses the catalogue on portal 110. Client device 120 presents to the user information, derived from the catalogue, on features available and allows the user to select a feature for consuming. As client device 120 browses the catalogue, feature metadata comprising an identifier that is recognisable in CMS 106 as identifying the associated media, is downloaded from the portal 110.

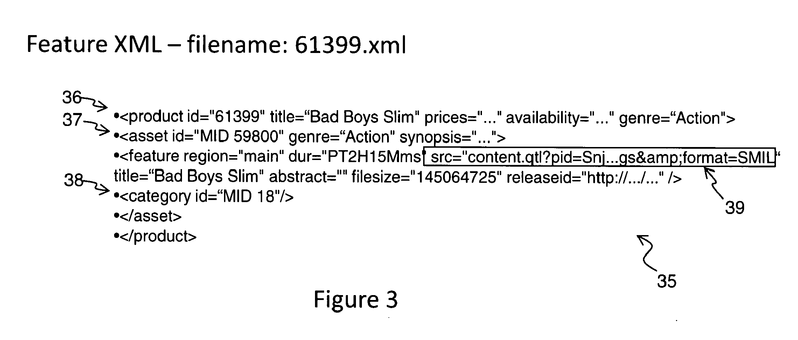

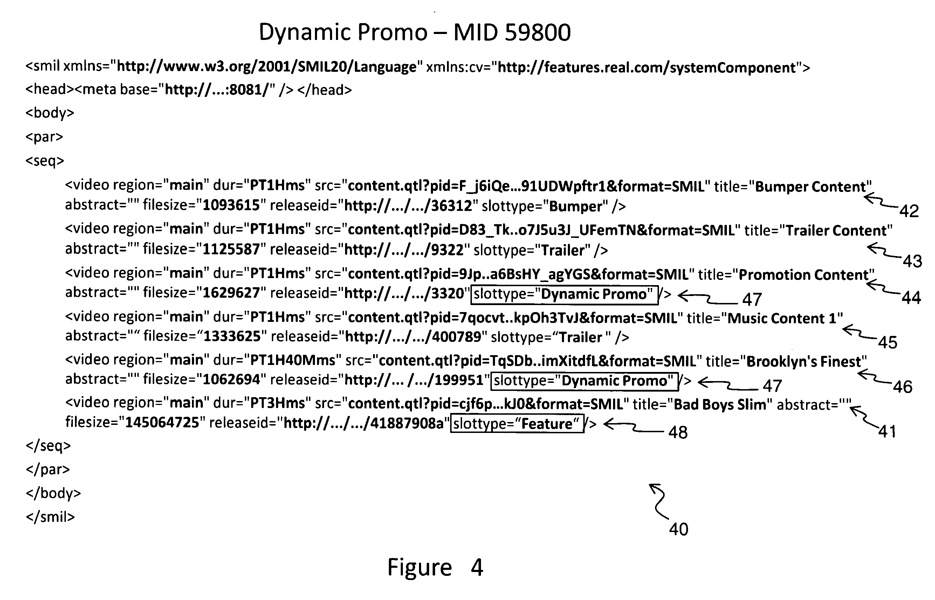

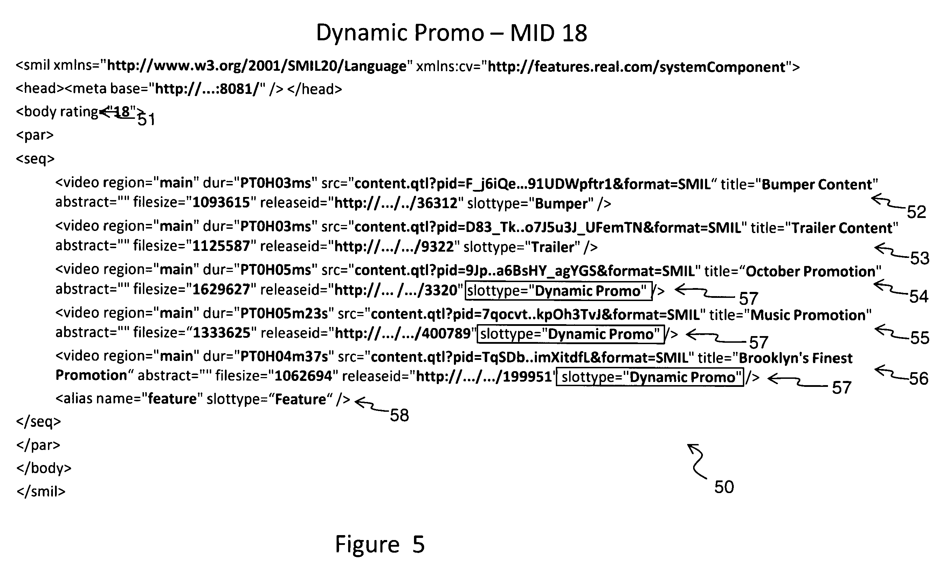

The downloaded feature metadata may be comprised in a feature XML files, such as feature XML file 35 shown in Figures 3. Feature XML file 35 provides information required by client device 120 to access marketing information relating to the selected feature. When the user has selected a feature, client device 120 then sends a request to CMS 106 for a corresponding marketing information (asset metadata), which may be available as a MID, e.g. as illustrated in Figure 4 and 5. The MID comprises metadata that identifies to client device 120 what assets are to be played (i.e. included in a programming unit) together with the feature and specifies the order in which the feature and assets are to be played.

Client device 120 reads the received MID 40, 50 and detects whether dynamic records are included. If no dynamic records are detected, client device 120 plays the content indicated by the MID in the normal way, i.e. client device 120 will play the feature and each of the assets identified by metadata in the MID. If dynamic records are detected in MID 40, 50, client device 120 will select a sub-set from the dynamic records to identify the assets to include in the programming unit with the feature, which may also be identified in the MID or in a separate SMIL file. According to a preferred mode of operation, client device 120 selects only one dynamic record from the MID, i.e. the selection count is one. According to an alternative preferred mode of operation, more than one (but not all) dynamic records may be selected from the MID. The selection count may be pre-programmed or decided at client device 120 according to rules, for example rules based on feature type or genre. The mode of operation selected may be based on client logic for a feature. For example, for a feature of type "film", users may be more inclined to accept multiple promos being played since that is what happens in a cinema and on a DVD, however, users may not accept multiple promos played with a TV programme or children's' content.

Once client device 120 has received the necessary metadata (i.e. feature metadata downloaded from the portal 110 and MID downloaded from the CMS 106) and any licensing or other requirements have been fulfilled, the media set out in the programming unit is retrieved from CDN 104 and played for the user in the normal way. Retrieval from the CDN 104 may be by streaming. Streaming implies that media is consumed (i.e. heard or viewed) as it is being delivered. Several protocols have been developed for streaming digital media. For example, Real-Time Streaming Protocol (RTSP), Real-time Transport Protocol (RTP), User Datagram Protocol (UDP) and Real-time Transport Control Protocol (RTCP). Hypertext Transfer Protocol (HTTP) may also be used for streaming digital media. The streamed digital media may be played by a streaming media player (e.g., Flash Player®, Shockwave®, Windows Media Player®, etc.) on client device 120 or on a separate output device. The streaming media player decodes the streaming media and presents it to the user.

Feature metadata downloaded from portal 110 will now be described in more detail. By way of example, a feature XML file for feature serial number 61399, is shown in Figure 3. Figure 3 shows feature XML file 35 for the feature "Bad Boy Slim", as provided to client device 120 by the portal 110. Feature XML file 35 comprises a product id field 36 (in this example, this takes the value "61399") identifying a specific feature and src field 39 with an indicator that will enable CMS 106 to locate an appropriate MID file for that feature. According to a preferred embodiment, feature XML file 35 comprises asset id field 37 (in this example, this takes the value "MID 59800"), which indicates the MID for this specific feature. Figure 4 shows the corresponding MID: Dynamic Promo - MID 59800 fill 40 for feature 61399.

According to a preferred alternative embodiment, feature XML file 35 comprises category ID field 38 (in this example, this takes the value "MID 18"), which indicates the MID for this feature class or genre. Figure 5 shows the corresponding MID: Dynamic Promo - MID 18 file 50 for feature category 18. The feature XML file of Figure 3 is simplified in order to improve clarity and an actual feature XML file may have more fields present and is likely comprise more attributes.

The MID of Figure 4 and that of Figure 5 identify at least two dynamic records from which a selection is made at client device 120. The asset metadata comprises a set of dynamic records relating in total to n optional assets (where n ≥ 2) from which client device 120 is able to select a subset of dynamic records relating in total to m of the optional assets (where m < n) to include with the feature in the programming unit. According to a preferred embodiment, optional assets are indicated by MID records of type "Dynamic Promo", as shown at 44 and 46 in Figure 4 and at 54 - 56 in Figure 5.

Asset metadata records for inclusion in the MID may be determined at the CMS 106 based on the rating or other characteristics of the selected feature in combination with scheduling or marketing information provided from marketing team 108. In this case, information on the selected feature (e.g. age-rating or genre), on the user or device may be included with the request sent by client device 120 to the CMS 106.

According to preferred aspects, each MID is specific to an individual feature or class (or genre) of features.

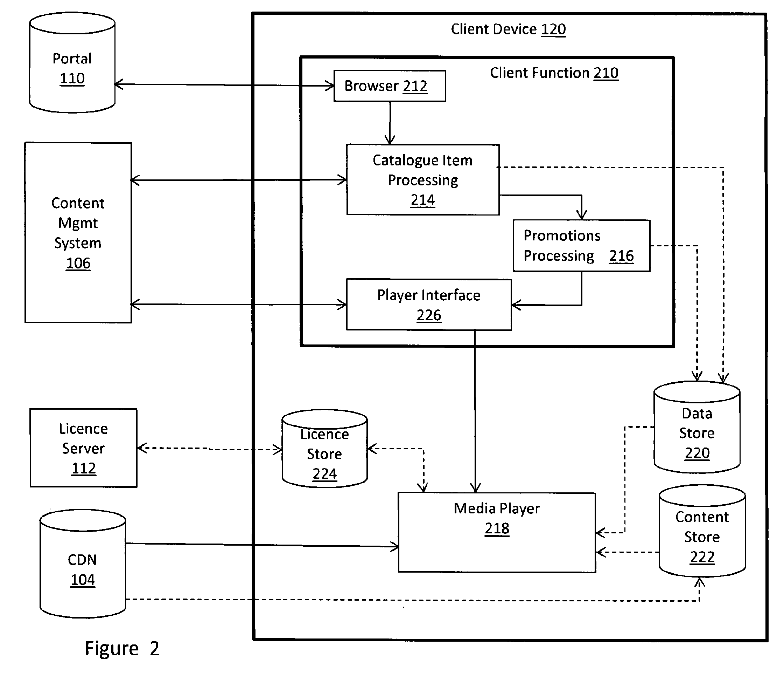

Figure 2 shows client device 120 in more detail. Other elements from the network or system of Figure 1 which connect directly to client device 120 are included for clarity.

Client device 120 comprises client function 210, which itself comprises browser function 212, catalogue item processing function (CIP) 214 promotions processing function (PP) 216 and player interface function 226. These functions may be implemented as processor code statements, processor software modules or processor software applications.

Browser function 212 accesses portal 110 to browse the contents, i.e. for selecting an item from the product catalogue hosted by portal 110. Metadata from the product catalogue (e.g. in the form of feature XML file 35) downloaded from portal 110 is passed initially to CIP 214 for processing.

CIP 214 processes information on features listed in the product catalogue metadata. Where the metadata received in from portal 110 indicates only a feature (and no asset) is to be played, CIP 214 forwards the metadata to PP 216. Where only a feature (and no asset) is to be played, PP 216 simply forwards the received metadata to player interface 226.

Where the metadata received from portal 110 indicates that a feature and at least one asset is to be played as part of a programming unit, CIP 214 sends a request to CMS 106 comprising the reference to the feature from 'src' field 39 of the product catalogue metadata (or another identifier), which can be used to locate an appropriate MID for that feature. In response to the request from CIP 214, CMS 106 checks the reference or identifier and, if recognised as relating to an existing MID, provides the appropriate MID to CIP 214. According to am alternative embodiment, upon receipt of the request, CMS 106 generates an appropriate MID and provides it to CIP 214. CIP 214 forwards to PP 216 the MID received from CMS 106 and may forward the metadata received from portal 110.

The MID forwarded to PP 216 may be sufficient in itself to define all the media for playing as part of the programming unit (referred to, below, as a fully populated MID) or may need to be supplemented with metadata on the feature from the feature XML file (referred to, below, as a partially populated MID). Where the MID forwarded to PP 216 is fully populated, PP 216 simply forwards the received metadata to player interface 226. Where The MID forwarded to PP 216 is partially populated, PP 216 may combine into a single SMIL file the metadata relating to the assets from the partially populated MID with metadata relating to the feature from the feature XML file. PP 216 forwards the combined SMIL file to player interface 226. Where more than one SMIL file for the same programming unit is passed to player interface 226, the SMIL files are passed to player interface 226 in the sequence in which the media is to be played.

Player interface 226 processes the received SMIL file or files for a programming unit and adds any additional information required (e.g. media file address and licence information) and passes a single SMIL file to media player 218. The contents of this SMIL file are expressed in the composition of the programming unit that is played to the user. The media of the programming unit is determined at least in part by the content of the MID and the way the MID is processed at client device 120. The MID determines what optional assets are presented to client device 120. Client device 120 determines how selection is made between these optional assets.

Player interface function 226 takes the SMIL file or files received from PP 216 and checks whether all the information that will be required by media player 218 is provided. Player interface 226 may check the metadata received from PP 216 for an address for each media file to be played. If an address for a media file to be played is not present in the received metadata, player interface 226 sends a request to CMS 106 comprising a reference to the media file from the 'src' field of the relevant metadata record (or another identifier), For example: src field 39 of feature XML file 35 or one or more of the src fields contained in MID records 41-46 of MID 40 and 52-56 of MID 50 may be used to locate an address for the respective media. CMS 106 responds to the request with a URl appropriate to the media indicated by the or each src value, i.e. an indication of the address in CDN 104 of the media to be played. Player interface 226 forwards to media player 218, the address indication received from CMS 106 together with the metadata received from PP 216, e.g. by overwriting the src field with the relevant, received URI. The inclusion of an identifier, rather than an address, in a src field increases flexibility in allowing the mapping of media file metadata to a location in CDN 104 to be defined at the CMS on-demand, i.e. at the time metadata is to be passed to media player 218 to initiate playing of the media.

According to an alternative embodiment, a MID src field may be set to the address of a media file when created at CMS 106 or stored at portal 110.

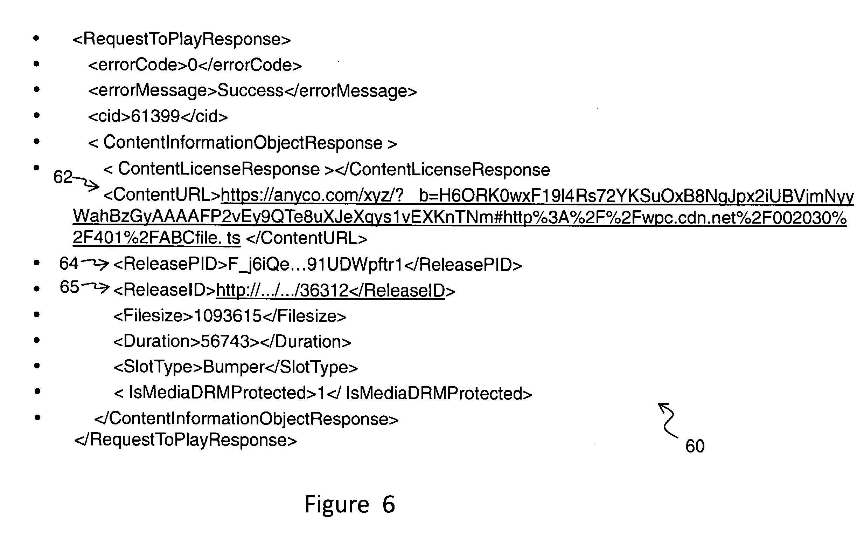

Figure 6 shows an example SMIL file 60 sent from CMS 106 to player interface 226. The example relates to a bumper, but could equally relate to any fixed or optional asset or feature. SMIL file 60 comprises URL 62 for the media and licence information in fields "releasepid" 64 and "releaseid" 65. Player interface 226 may take this data and use it to update a SMIL file received from PP 216 or may supply media player 218 with this data directly with the minimum of change. Player interface 226 may separate out the data and send the data to media player 218 one media file at a time or may, alternatively, append the data to an existing playlist.

Player interface 226 may check the metadata received from PP 216 for information on licences. When the "releaseid" field is populated, this indicates that a license for the corresponding media is required and may indicate an address at which the necessary license may be found. When this field is not populated, this is an indication that no license is required.

On receipt of the metadata in one or more SMIL files from player interface 226, media player 218 sends one or more requests to CDN 104 for the media making up the programming unit using address information comprised in the received metadata. On receipt of the requested media, media player 218 starts playing the media, i.e. providing the received media to a user interface device (e.g. display or audio output) for output to the user.

Client device 120 may comprise a data store 220 for storing metadata and a content store 222 for storing media files. When no data store 220 is present on the client device 120, metadata must be read and processed in real time; i.e. at the time of requesting media for playing to the user. With data store 220 present on the client device 120, metadata may be downloaded in advance and stored on client device 120 for processing at the appropriate time, i.e. when requesting, for playing to the user, media to which the metadata relates. When no content store 222 is present on the client device 120, media must be streamed, i.e. downloaded to client device 120 at the time of playing to the user. With content store 222 present on the client device 120, media files may be downloaded in advance and stored on client device 120 for playing later. When data store 220 and content store 222 are both present, media player 218 could be driven directly from the stores.

We now describe various MIDs in more detail. The following MIDs provide the additional metadata required to link the feature identified in a feature XML file with assets to be played together with the feature in a programming unit. Client device 120 needs this additional metadata in order to fulfil a user request to play the feature and in order to be able to play the assets associated with the selected feature. In particular, the MIDs, described below, comprises a src field for each asset record, which field contains a reference to the media file for that asset stored in CDN 104.

Figure 4 shows a fully populated MID. Dynamic Promo MID 59800 file 40 relates to feature XML file 35. Dynamic Promo MID 59800 file 40 comprises a number of records 41-46, with record 41 comprising metadata on a feature and records 42- 46 comprising metadata on various associated assets, such as promos. According to the invention a plurality of these asset records may be dynamic records, each dynamic record containing metadata on an optional asset.

In more detail, Dynamic Promo MID 59800 file 40 comprises a list of information on media files including feature media and associated asset media. In the order these are presented in the MID, these media files are: "Bumper Content" (record 42) which is a media asset file of type bumper; "Trailer Content" (record 43) which is a media asset file of type trailer; "Promotion Content" (record 44) which is a media asset file of type dynamic promo; "Music Content 1" (record 45) which is a media asset file of type trailer; "Brooklyn's Finest" (record 46) which is a media asset file of type dynamic promo; and "Bad Boys Slim" (record 41) which is the media feature file, with which the above listed assets are associated. The type of media is indicated by a "slottype" field in each media record, for example slottype field 48 indicates that record 41 relates to a feature. According to an aspect of the present invention, of the above entries in Dynamic Promo MID 59800 file 40, "Promotion Content" and "Brooklyn's Finest" are optional assets (as indicated by slottype fields 47 being set to "Dynamic Promo"). From these two optional assets, client device 120 may select one for including in the programming unit for any particular play of the feature, thus increasing flexibility in the assets played with a feature and allowing more variety in the choice of assets to be played each time the feature is repeated.

According to a further aspect, Dynamic Promo MID 59800 file 40 comprises static records 42, 43, 45: each static record containing metadata on an asset, such as promos, which is to be played each time the feature is played - i.e. these assets are not optional and there is no discretion on the part of client device 120 to select or reject any of them. These static records do not have a slottype set to "Dynamic Promo" but, instead, have a specific slottype such as "Bumper" or "Trailer".

Figure 5 shows partially populated Dynamic Promo MID 18 file 50. Unlike fully populated Dynamic Promo MID 59800 file 40, Dynamic Promo MID 18 file 50 does not have a record identifying a specific feature. Instead of a record identifying a specific feature, partially populated Dynamic Promo MID 18 file 50 comprises body rating field 51 identifying a feature category (in this example, this takes the value "18"). This value matches contents of category id field 38 of feature XML file 35. Dynamic Promo MID 18 file 50 is related, by the contents of body rating field 51 to feature XML file 35.. Dynamic Promo MID 18 file 50 also comprises a number of asset records 52-56 comprising metadata on various assets, such as promos, which are associated with the feature category. Instead of a record comprising metadata on a feature, Dynamic Promo MID 18 file 50 has alias name record 58, which identifies the position of the feature in the sequence for playing the programming unit. As with a feature record, alias name record 58 has a slottype field indicating that it relates to a feature.

According to the invention a plurality of the asset records are dynamic records, each dynamic record containing metadata on an optional asset, such as promos. In Figure 5, three dynamic promo records 54-56 are shown, respectively identifying an October Promotion, a Music Promotion and a Brooklyn's Finest Promotion. From these three optional assets, client device 120 may select one or two for including in the programming unit for any particular play of the feature, thus increasing flexibility in the assets played with a feature of a particular class or genre and allowing different assets to be played each time a feature from the same class or genre is repeated. In use the asset metadata of Dynamic Promo MID 18 file 50 may be combined at PP 216 with the feature metadata of feature XML file 35 to provide a single SMIL file (not shown but of similar content to fully populated Dynamic Promo MID 59800 file 40) for providing to player interface 226.

Although the above examples describe two or three optional assets per MID, fewer or more optional assets may be included in accordance with the present invention. Additional metadata, e.g. relating to rating, genre, etc (not shown for reasons of simplicity) may be provided to support the selection on the client device.

The above embodiments in which the MID are obtained by client device 120 from CMS 106 have the advantage of improved flexibility in that the CMS can create a MID on-demand, I.e. each time a MID is requested by the client. When a MID is created in this way, its contents may easily be made to reflect media that has only recently become available and to implement the most recent marketing information and rules. One disadvantage with this approach is the extra time required for the CMS to generate the MID. According to an alternative embodiment, client device 120 sources MIDs from portal 110, where they are stored by CMS 106. The client device requests a feature XML file from portal 110, as before but now, instead of requesting from CMS 106 details of assets associated with the feature, client device 120 obtains a MID from portal 110.

The invention provides the client device with a choice of assets from which the client may select one or more based on, for example, a random or round-robin selection. An optional asset may be associated with a set time-period during which it is available to play or is designed to be played. Advantageously, optional assets may have overlapping time periods so that the aggregate duration of a set of optional assets whose metadata is comprised in a MID is longer than the duration of a single optional asset of the set. Such an arrangement can reduce optional asset maintenance overhead. Where a MID includes metadata relating to over-lapping optional assets, then licence start and end dates may be sent as additional attributes to allow a current optional asset to be selected.

A set of optional assets whose metadata is comprised in a MID may relate to different age ratings or genres so allowing the client device to select the most appropriate promo at the time of playing. Where a MID includes metadata relating to different age ratings or genres the rating and/or genre of each optional asset may be provided as an additional attribute. A set of optional assets whose metadata is comprised in a MID may relate to different media formats, such as standard and high definition and media with or without captions, sub-titles and audio description.

When the client device receives a MID with more than one record of slot type "dynamic promo" the client device may treat them as a single group from which to select a one or more asset for playing with the feature. The selection criteria to choose which optional asset or optional assets to play with the feature may be based on (but is not limited to) one or more of the following criteria:
● Select one optional asset on a random basis or a round-robin basis for each feature played;
● where optional assets relate to over-lapping time periods, only choose from those that are currently in-licence, i.e. the start-date is earlier than, and the end-date is later than, the current time;
● where the optional assets have different age-ratings, select one that meets the age rating criteria for the feature and, optionally, complies with any parental-set age control;
● where the optional assets relate to different genres, select based on the feature genre;
● where the feature is HD then preferentially select a HD optional asset;
where the feature is sub-titled/audio-described, or the client device is configured for sub-titles or audio-descriptions, then preferentially select a optional asset that has those features.

A feature or other media may require a licence and may be encrypted to require the media to be used in accordance with conditions set out by the media provider or copyright holder. A user may, for example, be allowed to play a piece of media a fixed number of times or within a specified time period. According to a further embodiment, media player 218 checks the header information for each media file and will react to an entry in the header of a media file indicating that a licence is required. If media requiring a licence is delivered to client device 120 and passed to media player 218, media player 218 looks for evidence of an appropriate licence. The appropriate licence may be available on client device 120, however, if this is not the case, media player 218 will interrogate licence server 112 for an appropriate licence.

Client device 120 may comprise licence store 224 for storing licence information. When no licence store 224 is present on client device 120, any licenses will be downloaded, as required, i.e. on initiating play of licensed media and may be stored temporarily in the media player. With licence store 224 present on the client device 120, licences may be downloaded and stored in advance of requesting media. For example, details of subscriptions or other forms of licence which are valid over a period of time may be stored on client device 120.

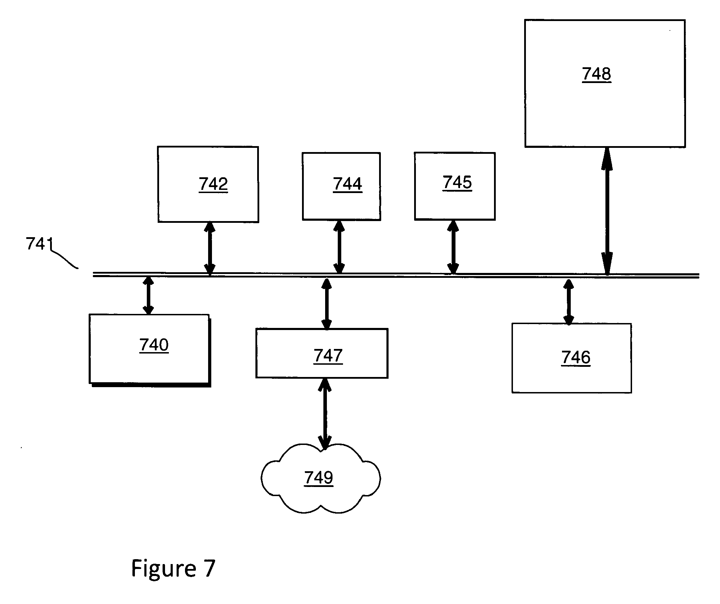

A typical architecture for a server, client or other form of computer apparatus on which software implementing the invention can be run, is shown in Figure 7. Each computer apparatus of the invention, such as CMS 106, MPU 102, portal 110, licence server 112 and client device 120 comprises a processor 740 for executing computer program instructions (including those comprised in processor code statements, processor software modules or processor software applications) and for managing and controlling the operation of the computer apparatus. Processor 740 is connected to via a bus 741 to a variety of devices including solid-state memory devices including non-volatile storage 744 and volatile storage 745. Further non-volatile storage 742 may comprise one or more magnetic or optical disc drives and may comprise removable, non-volatile storage means such as removable magnetic or optical media (for example re-writable or recordable DVDs) or non-volatile memory cards.

The computer apparatus further includes one or more network interfaces 747 for interfacing to and exchanging data via one or more networks 749 such as an IP network underpinning the various connections shown in Figures 1 and 2. The network interface(s) may be a local area network (LAN) adaptor connecting to a LAN. The LAN may itself be connected to other LANs and wide area networks (WANs) to enable the apparatus to communicate with and exchange data with other computer apparatuses. Alternatively, the network interface may be a DSL modem, or similar, that provides a connection to a WAN, such as the internet or an intranet, which enables communications with further networks. Interfaces 747 may include a wireless interface according to one or more of GSM, GPRS, Wi-Fi, WiMax, etc.

The computer apparatus can also, optionally, include user input/output devices such as a pointer device/keyboard 746 as well as a visual display 748. The computer apparatus is powered by power supply unit (not shown), typically obtaining power from an external power grid or internal battery (not shown). The skilled person will understand that this architecture is not limiting, but is merely an example of typical computer apparatus architecture. The computer apparatus may also be a distributed system, comprising a number of computer apparatuses communicating through respective interface ports 747 such that a user may access program and other data stored on a remote computer apparatus.

Non-volatile data storage means 742, 744 comprises an operating system and one or more application programs, including those suitable for providing client function 210, browser function 212, catalogue item processing function 214, promotions processing function 216, player interface function 226 and media player 218. The operating system comprises software that the computing apparatus requires to operate, communicate with other computer apparatuses, receive input from users, display outputs and results to users, etc. Non volatile data storage means 742, 744 may comprise applications and other computer code which can be executed in order to perform a method according to the present invention, for example such as the one described above and illustrated in the drawings. It will be understood that computer code may comprise a single integrated application or a number of different modules that are accessed separately to execute a method according to the present invention. Each module may perform the functionality of one or more of the processes, which comprise the present invention.

As will be understood by those skilled in the art, the invention may be implemented in computer program product software, any or all of which may be contained on various storage media so that the program can be loaded onto one or more general purpose computers or downloaded over a computer network using a suitable transmission medium. The computer program product used to implement the invention may be embodied on any suitable carrier, readable by a suitable computer input device, such as optically readable media and magnetic media.

In accordance with the art of computer programming, the invention is described above with reference to operations that are performed or executed by a computer system (such as that shown in Figure 7) or similar data processing system. Operations described above include the manipulation by a processor, such as processor 740, of data bits represented by physical quantities, such as electrical charge or current and magnetic state. It will be further understood that the data bits, represented, as previously indicated, will be maintained at memory locations, such as in non-volatile storage 742, 744 and volatile storage 745. The memory locations where data bits are maintained are physical locations that have particular electrical, magnetic, optical, or other physical properties corresponding to the data bits.

The above embodiments are to be understood as illustrative examples of the invention. Further embodiments of the invention are envisaged and will be evident to the skilled reader. It is to be understood that any feature described in relation to any one embodiment may be used alone, or in combination with other features described, and may also be used in combination with one or more features of another of the embodiments, or any combination of the embodiments. Furthermore, equivalents and modifications not described above will be evident to the skilled reader and may also be employed without departing from the scope of the invention, which is defined in the accompanying claims.

## Claims

1. A client device comprising:
a metadata processor configured to process, in response to a user request to play a first media part, metadata associated with the first media part to locate information relating to further metadata associated with a plurality of further media parts for playing in combination with the first media part;
in which the metadata processor is configured to use the information relating to the further metadata to access the further metadata;
in which the metadata processor is configured to select, from the further metadata, selected metadata associated with some but not all of the plurality of further media parts; and
a media player configured to access, on the basis of the metadata associated with the first media part and the selected further metadata, for playing in combination, the first media part and the media parts associated with the selected further metadata.

2. A method of accessing media for playing to a user in which the media comprises a first media part and further media parts for playing in combination with the first media part;
the method comprising:
receiving at a client device a first metadata group associated with the first media part;
processing the first metadata group to obtain information on a plurality of further metadata groups, in which each further metadata group is associated with a different one of the further media parts;
selecting at the client device a subset of the plurality of further metadata groups, in which the subset comprises metadata groups associated with a subset of the further media parts; and
accessing for playing in combination the first media part and the subset of the further media parts.

3. The method of claim 2, in which the first media part is media requested by the user.

4. The method of claim 2 or 3, in which the further media parts for playing in combination with the first media part are not requested by the user.

5. The method of any of claims 2 to 4 comprising receiving at the client device the first metadata group in response to a request for the first media part made on behalf of the user.

6. The method of any of claims 2 to 5 comprising processing the information to access the further metadata groups.

7. The method of any of claims 2 to 6 in which a metadata group comprises an identifier for the associated media part and in which the method comprises the client device issuing a request comprising the identifier for the address in a content delivery network of the media part, receiving the requested address and using the received address to access the media part.

8. The method of any of claims 2 to 7 in which a request for the plurality of further metadata groups comprises at least one of information on the first media part and information on the user.
